# FASCICULE DE BREVET EUROPEEN

(11) **EP 0 870 457 B1**
(45) Date de publication et mention de la délivrance du brevet: **25.02.2004**
(21) Numéro de dépôt: 98103413.5
(22) Date de dépôt: 12.07.1993
(51) Int. Cl.: A47J 31/06, A47J 31/40

(54) **Dispositif d'extraction de sachets souples fermés**
Vorrichtung zur Extraktion undurchlässiger, verformbarer Portionspackungen
Device for the extraction of sealed flexible bags

(30) Priorité: 20.07.1992 EP 92112364
(43) Date de publication de la demande: 14.10.1998
(62) Demande divisionnaire de: 93914582.7
(73) Titulaire: SOCIETE DES PRODUITS NESTLE S.A., 1800 Vevey (CH)
(72) Inventeur: Fond, Oliver, 76200 Dieppe (FR); Yoakim, Alfred, 1814 La Tour-De-Peilz (CH); Lavanchy, Gérard, 1008 Prilly (CH); Schaeffer, Jacques, 1803 Chardonne (CH); Pleisch, Jean-Pierre, CH-1010 Lausanne (CH)
(74) Mandataire: Thomas, Alain

(56) Documents cités:
- EP-A- 0 512 142
- EP-A- 0 521 188
- WO-A-92/07775
- FR-A- 1 410 288
- US-A- 3 007 392
- US-A- 3 327 614
- US-A- 3 470 812

## Description

L'invention concerne un dispositif pour la mise en oeuvre d'un procédé d'extraction de sachets souples fermés contenant au moins une substance pour la préparation d'une boisson, ledit sachet étant constitué de deux feuilles souples minces de même matière, soudées sur leur périphérie et sensiblement symétriques l'une de l'autre par rapport au plan de soudage, la dite substance pouvant être soit pulvérulente, soit compactée sous forme de galette de forme appropriée en un ou plusieurs morceaux.

L'utilisation de portions prédosées et préemballées de café moulu pour la préparation de café type espresso présente l'avantage de faciliter les opérations de préparation du café tout en garantissant une relative constance de qualité du produit.

Ces portions se présentent actuellement sous deux formes principales.

Selon une première forme générale, les portions décrites dans les brevets CH 636'311, US 5'012'629 et EPA 0'272'432 sont constituées de deux feuilles en papier filtre soudées sur leur périphérie et remplies de café moulu. Cette solution présente le désavantage de nécessiter un suremballage étanche afin d'éviter l'oxydation du produit pendant le stockage. Ce suremballage constitue un coût additionnel et une opération supplémentaire de la part du consommateur qui doit l'éliminer avant de procéder à l'extraction du café désiré.

Les brevets FR 1410288 et US 3007392 concernent des dispositifs permettant d'extraire des portions avec suremballage comme mentionnées ci-dessus. Le brevet EP 521188 concerne un montage d'adaptateur pour permettre à partir d'une machine espresso du commerce d'extraire des cartouches fermées.

Selon une deuxième forme, décrite dans la demande PCT/CH91/00'222, la portion est constituée d'une capsule étanche à fond concave s'ouvrant dans son dispositif d'extraction par déformation sous l'effet de l'introduction du fluide d'extraction, puis perforation contre des pointes. Cette capsule, constituée d'une enveloppe étanche formant une paroi latérale ainsi que deux parois dont l'une constitue le fond de la cartouche et l'autre ferme l'extrémité opposée de la cartouche, présente l'inconvénient d'employer simultanément plusieurs matériaux d'emballage différents, dont l'un au moins doit être suffisamment épais pour lui conférer une semi-rigidité. Elle ne peut être utilisée que dans un seul sens avec un dispositif d'extraction parfaitement adapté à la capsule comme à sa disposition. De plus elle est relativement volumineuse, le café n'y étant pas compacté.

L'objet de la présente invention est de proposer un dispositif permettant l'extraction d'un sachet souple fermé sans ouverture préalable, le procédé ne nécessitant aucune exigence particulière quant au positionnement des faces supérieure et inférieure du sachet.

L'invention concerne un dispositif pour la mise en oeuvre d'un procédé dans lequel on met en place et on serre ledit sachet dans son dispositif d'extraction constitué d'une chambre fermée et comportant un porte-sachet, on introduit dans le sachet un mélange d'air et d'eau à une pression comprise entre 2 et 20 bar au moyen d'un organe d'amenée de manière à étirer progresivement et localement la face d'extraction du sachet contre une surface en relief du porte-sachet comportant des éléments en relief et en creux, ladite face d'extraction se déchirant en des. endroits multiples selon un tracé prédéterminé par l'emplacement desdits éléments en relief et/ou en creux en y atteignant sa tension de rupture, pour permettre l'écoulement du liquide après extraction.

Le procédé est également caractérisé par la valeur élevée de la pression d'extraction, car sa valeur maximum n'est pas obligatoirement atteinte lors de l'ouverture du sachet., mais peut l'être plus tard au cours de l'extraction, lorsque la perte de charge à travers le lit de café a atteint son maximum.

Le procédé sera mieux compris par la description de ses phases successives, pouvant être réalisées, dans le cas particulier de son utilisation pour du café, à partir de machines espresso du commercé comportant les moyens, dès la construction ou par adjonction d'adaptateurs, pour perforer l'une des faces du sachet, introduire l'eau à 1-intérieur, déchirer de manière contrôlée l'autre face par suite de sa déformation sous l'effet de la pression et recueillir l'extrait de café.
- Dans un premier temps, le sachet est mis en place dans le porte-sachet, la face inférieure dans cette disposition devenant alors la face d'extraction.
- Dans un deuxième temps, le porte-sachet muni du sachet est mis en place dans la machine, la face supérieure dudit sachet est alors perforée par le ou les éléments tranchants ou perforants placés sous la face inférieure de la partie supérieure de la cavité d'extraction.

Au cours de cette étape, la forme du sachet peut être volontairement modifiée par rapport à sa forme initiale par adaptation à la configuration de la cavité du dispositif d'extraction. Ainsi la forme du sachet est parfaitement définie préalablement à l'extraction, lors de sa mise en place, même après avoir subi des déformations éventuelles consécutives aux manipulations antérieures, en particulier lorsque ledit sachet contient un produit faiblement compacté ou même non compacté.

Selon une variante du procédé, l'opération de mise en place comporte un effet de serrage qui réduit le volume intérieur disponible du sachet afin de limiter à un minimum défini les endroits non remplis par la substance à extraire. En effet, selon le mode de fabrication dudit sachet, son volume initial peut être supérieur à celui de la substance contenue, s'il est désiré que cette substance soit légèrement compactée avant extraction, comme cela est le cas avec le café moulu. Cette adaptation du volume disponible permet de favoriser l'extraction; la substance étant régulièrement disposée dans ladite cavité, elle est correctement traversée par le fluide d'extraction et de plus, lors de son évacuation, le sachet n'est pas gorgé d'eau en excès, ce qui favorise la propreté et l'aspect pratique du procédé.

De plus, la face supérieure souple du sachet peut, sous l'effet de la pression de l'eau et du gonflement du café, venir se plaquer contre la face supérieure de la chambre, améliorant d'autant le mouillage du café et pour autant la qualité de son extraction.
Selon une autre variante du procédé, des moyens auxiliaires prévus sous la face supérieure du dispositif d'extraction et/ou sur la face inférieure dudit dispositif, permettent de déplacer le café du sachet vers des zones déterminées et privilégiées afin de favoriser la qualité de l'extraction en évitant les zones mortes. Ces moyens peuvent constituer en une forme géométrique particulière des dites faces.

En effet, afin de régulariser l'extraction d'un lit de substance, il est souhaitable que ce lit ne soit ni trop mince ni d'une épaisseur inégale. Or, avec un sachet souple, ces défauts pourraient être observés si l'on ne mettait pas en oeuvre les moyens décrits ci-dessus.

Dans une variante de sachets contenant du café compacté lors de la production, le volume de la cavité correspond de plus près à la dimension de la galette et du sachet afin d'éviter des zones libres entre le sachet et la galette et des chemins préférentiels intempestifs lors de l'extraction.
- Dans un troisième temps, l'eau mélangée ou non à de l'air est introduite dans le sachet sous une pression de 2 à 20 bar, de préférence de 4 à 15 bar. Les faces du sachet se plaquent contre les parois de la cavité d'extraction, la face d'extraction se déformant localement en s'étirant progressivement sous l'effet de la pression sur les éléments en relief du porte-sachet muni des orifices d'évacuation de l'infusion. Cette phase essentielle assure un temps de prémouillage du café avant extraction.

L'air peut être celui présent dans les conduites de ladite machine qui se mélange à l'eau lors de la mise en route du processus d'extraction.

Dans certaines conditions, selon les machines espresso employées et la température initiale de chauffage, les premières fractions d'eau peuvent se présenter sous forme de vapeur.

Selon une variante du procédé, un temps de pause, avec arrêt de l'injection du fluide d'extraction entre le troisième et le quatrième temps, peut être observé.
- Dans un quatrième temps, la matière constituant ladite face d'extraction atteignant, suite à son étirage, sa tension de rupture, les déchirures s'amorçent à l'emplacement des parties saillantes du relief ou dans les parties creuses formées entre lesdites parties en relief. Selon la forme du relief, les déchirures peuvent aussi se prolonger dans les deux zones mentionnées précédemment. Les parties ainsi fracturées sans se détacher de la face d'extraction libérée de sa tension viennent s'appliquer précisément contre le relief avec pour effet d'agrandir les ouvertures réalisées, favorisant l'écoulement ultérieur du fluide d'extraction, mais de telle manière qu'aucune dispersion de matière ne se fasse en dehors du sachet. La pression interne du sachet chute partiellement, mais cette décompression momentanée est limitée car le flux de fluide qui s'échappe du sachet est laminé tant par les faibles interstices constitués par les lèvres de la matière déchirée de la face d'extraction s'appuyant sur le relief que par les orifices d'écoulement pratiqués dans ou au voisinage de l'élément en relief. L'écoulement est ainsi parfaitement contrôlé, excluant notamment tout déplacement intempestif de la phase solide du contenu du sachet qui pourrait obstruer les orifices d'écoulement et gêner ultérieurement la régularité et la reproductibilité du processus d'extraction.

Selon la terminologie employée dans le brevet CH 668'545 concernant une capsule avec opercule pré-affaibli, cette phase d'ouverture du sachet peut être considérée comme une phase d'aération de la matière pulvérulente.

Selon une variante du procédé, un temps de pause, avec arrêt de l'injection du fluide d'extraction entre le quatrième et le cinquième temps, peut être observé.
- Dans un cinquième temps, le café est extrait sous une pression de 2 à 20 bar, cette pression étant volontairement et essentiellement liée à la perte de charge à travers le lit de café mouillé et par là-même compacté. Il s'agit de la phase d'extraction.

Des ouvertures complémentaires de la face d'extraction peuvent au besoin être produites par les parties en relief du porte-sachet de hauteur dégressive prévues de préférence en sa zone périphérique lorsque la pression d'extraction atteint des valeurs élevées.
- Dans un sixième temps, le porte-sachet est libéré et le sachet est évacué, par exemple par simple retournement du porte-sachet.

Dans une variante du système dite à mâchoire, décrite plus loin, l'éjection du sachet s'effectue manuellement à l'aide d'un insert ou automatiquement dans un récipient adéquat à la fin du cinquième temps.

Selon une première variante du procédé, les déchirures sont produites dans la partie centrale des cavités (creux) formées entre les parties saillantes d'un élément en relief lorsque la matière atteint sa tension de rupture à la flèche de sa déformation.

Selon une deuxième variante de mise en oeuvre du procédé, l'amorce de déchirure de la face d'extraction du sachet peut se faire au niveau des éléments en relief puis se prolonger dans le centre des cavités (creux) formées par lesdits éléments.

Selon une troisième variante du procédé, l'ouverture de la face d'extraction se fait par obtention de la tension de rupture à l'emplacement d'éléments en relief éventuellement associés à des éléments complémentaires, qui n'ont pas vocation à déchirer la face d'extraction du sachet mais à favoriser l'écoulement, tout en garantissant la propreté du système.

L'extrait de café parvient à passer entre les parties déchirées et déformées de la face d'extraction du sachet jusqu'à des orifices d'écoulement, car ces parties déchirées ne peuvent se plaquer de manière parfaitement étanche contre le relief du fait d'une certaine rigidité relative due à leurs dimensions assez réduites.

Le nombre des déchirures, réalisées dans la face d'extraction, se situe préférentiellement à plusieurs dizaines. De manière générale, la géométrie des éléments en relief est agencée de telle façon que les parties déchirées ne se détachent pas complètement, mais restent solidaires du sachet.

La description donnée ci-après à titre d'exemple d'application au café torréfié et moulu n'est pas limitative, le procédé étant applicable à d'autres produits ou mélange de produits enfermés dans un sachet souple tel du thé, du café soluble, un mélange de café moulu et de café soluble, un produit chocolaté ou un aliment déshydraté et destinés à l'obtention de boissons ou d'aliments sous forme d'infusions.

Le sachet utilisé pour la mise en oeuvre du procédé selon l'invention peut être d'un type semblable à celui faisant l'objet de la demande de brevet européen 92'111'422.9, déposée le 6 juillet 1992 par la demanderesse, sous le titre "Sachet souple fermé et son procédé de fabrication".

Le diamètre intérieur du sachet se situe de préférence entre 25 et 70 mm et la bordure soudée a une largeur de 3 à 15 mm. Une fois rempli, le sachet présente une épaisseur en son centre, de préférence entre 5 et 20 mm. Dans le cas du café, la dose contenue peut varier entre 5 et 20 g de café moulu compacté ou non sous forme de galette. La forme générale du sachet est circulaire, ovale ou polygonale de 4 à 10 côtés à bords éventuellement arrondis, ou peut être une combinaison de ces trois éléments.

La face d'extraction du sachet après sa mise en place dans la machine n'est pas obligatoirement située dans un plan horizontal. D'autres orientations peuvent être préférées pour la commodité des procédés de mise en oeuvre.

Au lieu de disposer le sachet dans le porte-sachet qui est ensuite placé dans la machine, on peut prévoir un dispositif dans lequel le porte-sachet fait partie intégrante de la machine dans un système appelé à mâchoire, le sachet étant inséré directement dans la machine et la perforation de la partie supérieure du sachet par les éléments tranchants ou perforants s'effectue lors de la fermeture de la mâchoire.

Dans ce cas, le dispositif selon l'invention comprend
- une partie supérieure munie de moyens destinés à perforer la face supérieure deu sachet et permettant l'introduction de l'eau dans ledit sachet et d'un levier de blocage,
- une partie inférieure présentant un logement pour le logement de la capsule et des éléments en creux et en relief,
dans lequel le sachet est susceptible d'être inséré directement dans ledit dispositif, la partie supérieure
ou la partie inférieure a soit un mouvement de rotation selon un axe horizontal ou vertical, soit un mouvement de rabattement, soit un mouvement à tiroir permettant cette insertion,
dans lequel le levier de blocage solidarise la partie supérieure et la partie inférieure au moment de l'extraction du sachet et
dans lequel la face d'extraction du sachet est étirée progressivement et localement contre les éléments en relief et en creux, ladite face d'extraction se déchirant en des endroits multiples selon un tracé prédéterminé par l'emplacement desdits éléments en relief et en creux en y atteigant sa tension de rupture, pour permettre l'écoulement du liquide après extraction.

L'avantage de cette solution est qu'au moment du serrage ou du desserrage, il n'y a pas de mouvement rotatif du sachet, ce qui évite l'utilisation de douches ou pyramides tournantes.

Un autre avantage est que la force de serrage avant l'extraction peut être plus élevée grâce à un mécanisme de démultiplication. On peut en plus avec ce système envisager une éjection automatique du sachet après l'extraction dans un bac prévu à cet effet.

Cette disposition permet également de réaliser l'introduction de l'eau et l'extraction du café sur la même face du sachet, le ou les organes d'introduction de l'eau et les éléments en relief étant de préférence concentriques, les uns au centre, les autres en périphérie.

Dans une version simplifiée, le sachet est sorti à l'aide d'une coupelle qui fait partie intégrante ou non du porte-sachet. Cette coupelle peut par exemple revêtir une forme annulaire et s'insérer autour de la partie comportant les éléments en relief. Elle peut être mue par un ressort pour l'éjection du sachet ou être retirée manuellement de la partie inférieure. En l'absence de cette coupelle, l'utilisation d'un sachet muni d'une languette latérale est particulièrement avantageuse.

Il est évident à l'homme de l'art que les diverses variantes ci-dessus peuvent être adaptées pour être intégrées à un dispositif mécanique automatisé qui, par des moyens secondaires connus et dont il ne sera pas fait de description détaillée, assure la mise en place du sachet, le serrage étanche, puis après infusion, le desserrage et le dégagement du sachet usagé. La disposition des pièces respectives peut être modifiée par rapport à celle ci-dessus décrite, la face d'extraction étant par exemple disposée selon un plan vertical ou oblique. L'injection d'eau peut alors lui être perpendiculaire ou non.

Selon une première variante d'exécution du dispositif d'introduction de l'eau, les moyens de la pièce supérieure destinés à perforer la face supérieure du sachet et à introduire l'eau dans le sachet peuvent se présenter sous la forme d'une grille de répartition d'eau pourvue sur sa face inférieure d'éléments tels des pointes, lames ou croix saillantes, par exemple ceux décrits dans la demande de brevet européen 91'111'211.8, déposée le 5 juillet 1991. Les orifices de passage de l'eau ne coïncident pas obligatoirement avec lesdits éléments, mais peuvent avantageusement se trouver en leur périphérie.

Selon une seconde variante, on peut prévoir une ou plusieurs aiguilles d'injection d'eau, disposées en saillie dans la cavité de la pièce supérieure, par exemple du type décrit dans la demande de brevet européen 90'114'402.2, déposée le 27 juillet 1990. Une telle aiguille permet de perforer la face supérieure du sachet lors de la mise en place dans le dispositif complet et d'injecter le fluide à l'intérieur dudit sachet.

La ou les aiguilles d'introduction de l'eau sont conçues selon une forme effilée, de telle manière qu'elles perforent le matériau du sachet selon des ouvertures capables de se refermer au moins partiellement, ce afin de minimaliser le dégorgement lors du retrait du sachet. De plus, elles n'empêchent pas le sachet de se gonfler et de se plaquer contre la paroi avoisinante. Enfin les dimension et disposition de ces organes d'introduction de l'eau sont choisies de façon à ne pas créer des chemins préférentiels intempestifs dans le lit de café, mais au contraire à l'irriguer régulièrement dans tout son volume. La forme, la dimension et la disposition de la ou des aiguilles sont adaptées à la forme et à la dimension du sachet.

Dans le cas d'une disposition comportant plusieurs aiguilles d'introduction de l'eau, il peut être avantageux de monter ces aiguilles sur une pièce capable d'un mouvement rotatif afin de ne pas déchirer le sachet, ce mouvement étant alors synchronisé par entraînement lors de l'insertion du porte-sachet.

Les éléments en relief assurant l'ouverture de la face d'extraction du sachet sont de même nature que les cinq types décrits dans la demande de brevet européen 92'107'548.7 déposée le 5 mai 1992.

Dans une première forme de réalisation, les éléments en relief sont constitués de petites baguettes rectilignes ou légèrement sinueuses ou sous forme d'arcs, fermés ou non, présentant des longueurs distinctes et disposées de façon radiale, concentrique, parallèle ou perpendiculaire sur une grille percée de très nombreux petits trous. Leur section peut être semi-circulaire ou approximativement trapézoïdale. Leur largeur et hauteur mesurent de 0.5 à 7 mm.

Dans une deuxième forme de réalisation, les éléments en relief peuvent aussi se présenter sous forme de petits prismes, troncs de pyramides, cylindres ou troncs de cône de section polygonale, circulaire ou non..

Dans une troisième forme de réalisation, les éléments en relief forment à leur base des cavités circulaires ou ovoïdes au fond desquelles se trouvent les orifices d'écoulement du café. La profondeur des cavités peut aller de 1 à 7 mm.

Selon une variante d'exécution des. trois formes, de réalisation ci-dessus, les éléments en relief constituent une pièce en soi disposée sur une grille d'écoulement.

Selon une autre variante, les éléments en relief peuvent faire partie intégrante d'une plaquette percée des orifices de filtration pour l'écoulement de l'extrait.

Dans une quatrième forme non représentée de réalisation, la disposition relative des éléments en relief et des orifices d'écoulement est inversée. L'élément en relief est constitué d'une pièce comportant des parties en creux par rapport à sa surface principale et des orifices d'écoulement pratiqués au moins dans la partie saillante. La matière se déchire de manière à découvrir les parties saillantes munies des orifices.

Dans une cinquième forme de réalisation, les éléments en relief sont des pièces pyramidales associées à des éléments complémentaires, qui n'ont pas vocation à déchirer la face d'extraction de la cartouche, mais à favoriser l'écoulement du fluide extrait tout en retenant la substance, s.ous forme par exemple de terrasses de 0.2 à 1 mm de largeur entourant les formes pyramidales et de canaux à la base, larges d'environ 0.7 à 2.5 mm et profonds d'environ 0.3 à 1.8 mm. Ces canaux sont percés de nombreux orifices d'écoulement, calibrés à un diamètre de quelques dixièmes de millimètre.

Dans une première variante, les formes pyramidales sont constituées de pyramides tronquées de 1 à 7 mm de coté et d'une hauteur de 1 à 7 mm, disposées de façon préférentielle selon un quadrillage dont le pas est usuellement compris entre 3 et 10 mm. Les faces présentent un angle préférentiel de 10 à 30° avec la verticale.

La face supérieure des pyramides sert.de surface d'appui lorsqu'on soumet le sachet à l'effet de la pression. L'amorce de déchirure se fait sur les arêtes des dites pyramides.

Dans une seconde variante, les formes pyramidales sont constituées de pyramides, entières et/ou partielles, c'est à dire dissymétriques.
Les pyramides dissymétriques peuvent être obtenues, soit avec des pyramides dont les faces verticales ne présentent pas toutes le même angle, soit avec des pyramides à l'origine symétriques mais dont des portions verticales ont été éliminées.

Pour cette cinquième forme de réalisation, les faces des éléments en relief et éventuellement des terrasses et des canaux peuvent présenter des petits sillons (canaux) favorisant l'évacuation de l'extrait, la matière de la face d'extraction présentant une rigidité suffisante ne lui permettant pas d'épouser complètement la forme du sillon.

Plusieurs types de pyramides peuvent coexister dans cette cinquième forme de réalisation.

Dans une sixième forme préférée de réalisation, la hauteur des pyramides et des canaux adjacents n'est pas constante sur toute la surface. Une partie de celle-ci est destinée à ne provoquer l'ouverture du sachet que lorsqu'une pression plus élevée que la valeur usuelle est atteinte, corrigeant ainsi le débit d'extraction en l'augmentant. Cet effet est de préférence obtenu en diminuant la hauteur. des pyramides et en augmentant la profondeur des canaux séparant les terrasses. Son but est de régulariser le débit d'un sachet à l'autre, qui sans celà pourrait varier selon le blend de café contenu.

Dans une variante des formes ci-dessus, l'extraction peut se limiter à une zone préférentiellement annulaire de la face inférieure, afin de forcer l'eau à parcourir un chemin maximal dans le lit de café lorsque l'introduction de l'eau est centrale. Réciproquement, la configuration inverse est possible.

Dans tous les cas décrits ci-dessus, les ouvertures de la paroi inférieure du sachet sont la conséquence de la déformation jusqu'à rupture, mais seulement sous l'effet et après la mise en pression par l'eau ou le mélange d'eau et d'air d'extraction.

Il est bien entendu que tout ce qui a été décrit ci-dessus en relation avec le dispositif selon l'invention et qui concerne les éléments en relief, la pièce d'écoulement, le dispositif d'étanchéité du porte-sachet reste également valable pour le porte-sachet sans qu'il soit nécessaire de répéter la description y relative.

En particulier, le porte-sachet peut être en une ou en deux pièces comprenant une pièce inférieure recevant le sachet et le support de cette pièce, ladite pièce inférieure comprenant des éléments en relief et en creux et des orifices d'écoulement pour permettre l'écoulement du liquide.

La suite de la description est faite en référence aux dessins les figures 1 à 10 étant simplement utiles à la compréhension de l'invention, sur lesquels :
Fig. 1 est une représentation schématique d'un dispositif d'extraction de sachet souple fermé,
Fig. 1a est une vue agrandie de la partie A de la Fig. 1,
Fig. 2 est une vue en coupe éclatée de la partie supérieure pour l'injection de l'eau dudit dispositif,
Fig. 3 est une vue en plan des diverses pointes d'injection d'eau de la Fig. 2,
Fig. 4 est une représentation schématique partielle d'un dispositif d'extraction de sachet souple fermé,
Fig. 5 est une représentation schématique de la partie supérieure pour l'injection de l'eau,
Fig. 6 est une vue partielle en plan de la pièce inférieure constituée d'éléments en relief et en creux et d'orifices d'écoulement,
Fig. 7 est une coupe selon la ligne 6-6 de la Fig. 6,
Fig. 8 est une représentation schématique du positionnement des organes d'arrivée d'eau prévus sous la face supérieure du dispositif et des éléments en relief prévus sur la face inférieure pour l'écoulement de l'extrait de café,
Fig. 9 est une représentation schématique du positionnement des organes d'arrivée d'eau prévus sous la face supérieure du dispositif et des éléments en relief prévus sur la face inférieure pour l'écoulement de l'extrait de café,
Fig. 10 est une représentation schématique du positionnement des organes d'arrivée d'eau et d'extraction du café, le tout prévu sur la face inférieure du dispositif,
Fig. 11 est une repésentation schématique en perspective d'un système d'extraction de sachet souple fermé, selon l'invention et
Fig. 12 est une représentation schématique de la partie supérieure du système d'extraction selon la Fig. 11.

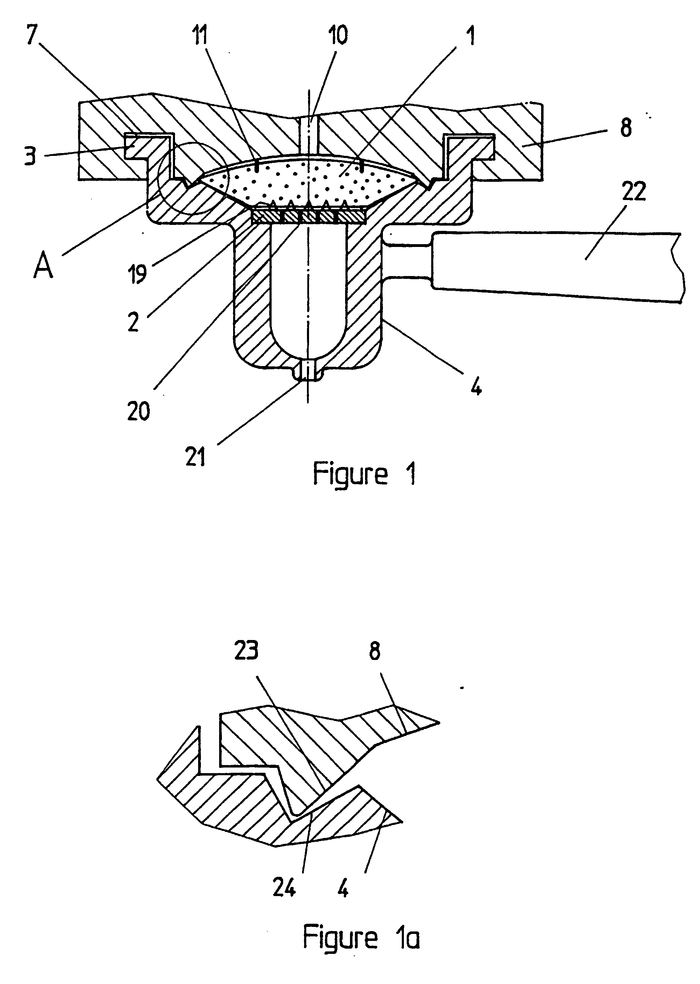

En référence à la Fig. 1, le sachet (1) est disposé sur la pièce inférieure (2) constituant avec son support (4) le porte-sachet. Le support comporte deux pattes de serrage (3) diamétralement opposées et prévues pour s'engager sur les rampes de serrage (7) de la pièce supérieure (8).

La pièce supérieure (8) comporte une arrivée d'eau (10) et des pointes (11) pour percer la face supérieure du sachet (1). la pièce inférieure (2) présent des éléments saillants (19) et des orifices d'écoulement (20).

On opère de la manière suivante: on dispose le sachet (1) sur la pièce inférieure (2) et en maintenant par la poignée (22) l'ensemble support (4), pièce inférieure (2) et sachet (1), on engage les pattes de serrage (3) sur les rampes de serrage (7) de la pièce supérieure (8).

L'étanchéité est assurée en A. Le bord conique inférieur intérieur (23) de la pièce supérieure coopère avec le rebord conique (24) de la pièce inférieure en pinçant la périphérie du sachet (1). Les pointes (11) percent le sachet (1) et l'eau chaude arrive par le canal d'arrivée d'eau (10) et pénètre dans le sachet (1). La pression dans le sachet augmente et la face inférieure du sachet va se plaquer contre les éléments saillants (19) jusqu'à ce qu'elle se déchire contre lesdits éléments saillants en atteignant sa tension de rupture. La phase d'extraction commence. Le café s'écoule par les orifices d'écoulement (20) et est récupéré sous l'alésage (21) dans un récipient (non représenté).

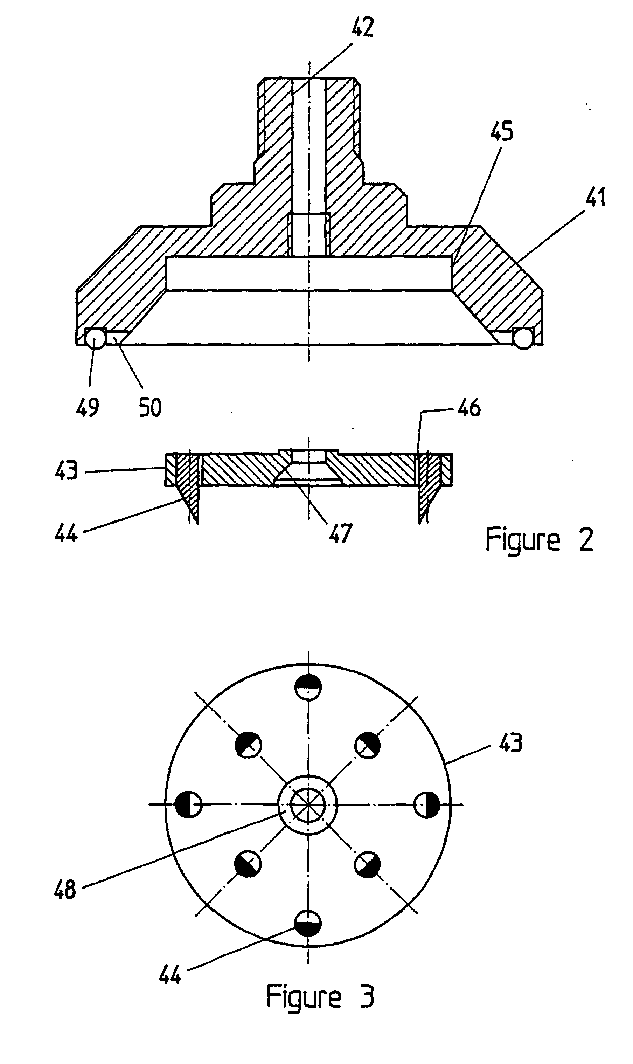

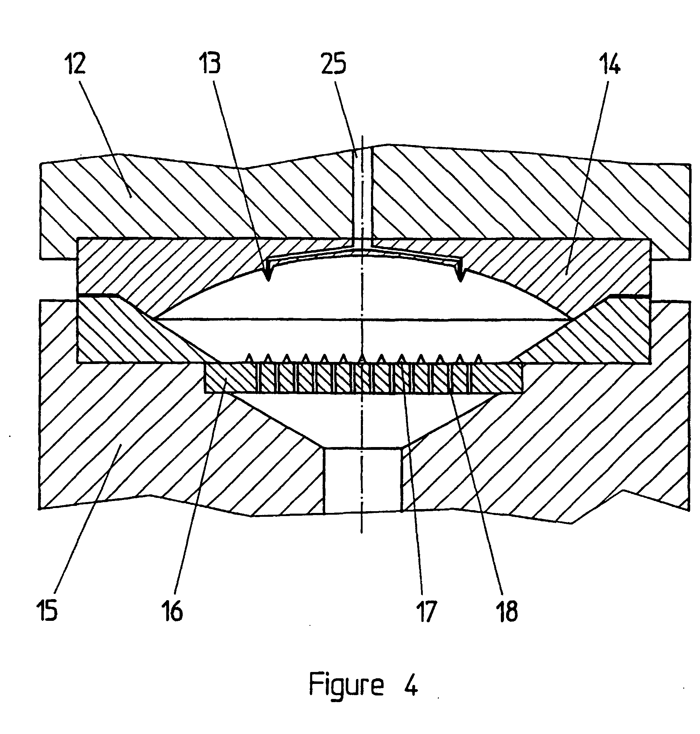

Les Fig. 2 et 3 montrent une partie supérieure pour l'arrivée d'eau différente de celle de la Fig. 1. Cette pièce est en deux parties: la pièce (41) comportant une arrivée d'eau centrale (42) et une grille de répartition (43) portant des pointes (44) pour percer la face supérieure du sachet à extraire, ledit disque étant prévu pour se loger dans le logement (45) de la pièce (41). L'alésage (46) du disque (43) est occupé partiellement par les pointes (44), ce qui permet de laisser passer l'eau pour qu'elle pénètre dans le sachet à extraire. Le disque (43) peut tourne dans son logement (45); il est maintenu en place par une vis (48) disposée dans l'alésage (47) du disque (43).

Un joint torique (49) est prévu ainsi que plusieurs canaux d'amenée d'eau (50) disposés sur la périphérie de la pièce (41), de manière à ce que lors de l'extraction, l'eau pousse le joint vers le bas et assure ainsi l'étanchéité du système.

En référence à la Fig. 4, le dispositif d'extraction comprend une pièce supérieure (12) présentant des aiguilles d'injection (13) placée sous la voûte de la cavité. Lors du serrage, les aiguilles d'injection perforent la face supérieure du sachet permettant ultérieurement l'introduction du fluide d'extraction arrivant par le canal (25). Cette pièce supérieure présente un élément saillant (14) d'aspect conique. Cet élément saillant s'emboite dans un cône complémentaire (26) disposé dans la pièce inférieure (15). En s'emboitant l'un dans l'autre lors du serrage des pièces, ces éléments contribuent à tendre les faces du sachet et recentrer la substance pulvérulente.

La pièce inférieure dispose, en outre, d'éléments saillants (17) et des orifices d'écoulement (18) permettant au café de s'écouler.

La Fig. 4 ne représente pas le système de maintien par les pattes et les rampes de serrage. Le mode d'extraction est le même que pour le dispositif de la Fig. 1.

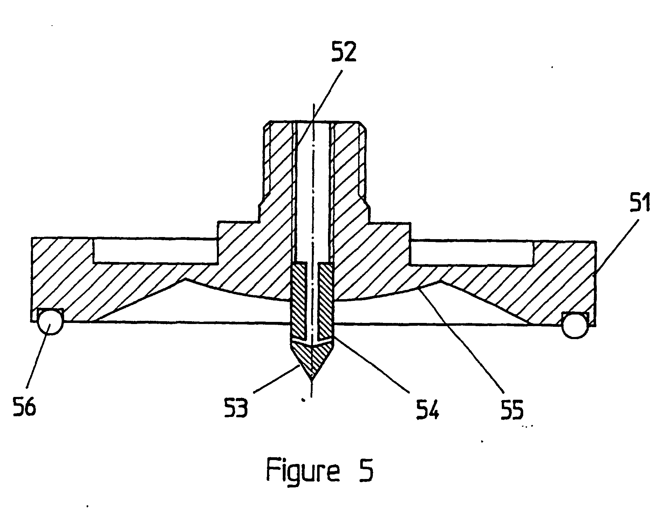

La Fig. 5 représente un autre mode de réalisation de la partie supérieure d'injection d'eau (51) comportant une arrivée d'eau (52) et une pointe unique (53) pour percer le sachet, ladite pointe comprenant un alésage (54) amenant l'eau dans le sachet. Cette partie (51) comprend une zone concave (55) permettant une meilleure répartition de l'eau, de manière à ce que la face supérieure du sachet se plaque contre ladite zone concave. Elle présente en outre un joint torique (56) pour assurer l'étanchéité.

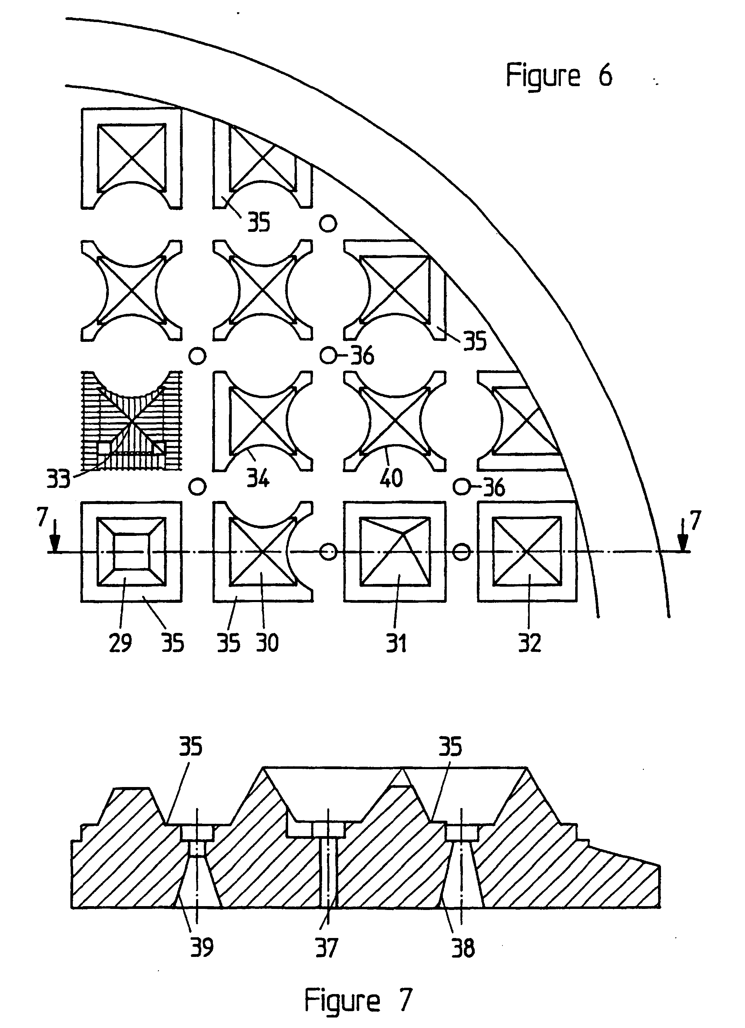

On a selon la Fig. 6 différents types d'éléments pyramidaux en relief. On peut avoir des troncs de pyramide (29), des pyramides (30) tronquées sur 2 faces, des pyramides dissymétriques (31), des pyramides symétriques (32), des pyramides (33) avec ondulations, des pyramides (34) tronquées sur 3 faces et des pyramides (40) tronquées sur quatre faces. Ces pyramides ont toutes des terrasses (35).

Les orifices d'écoulement (36) peuvent être de trois formes différentes: cylindriques (37), évasés vers le bas (38) ou cylindriques et évasés vers le bas (39).

La présence de terrasses (35) permet de contrôler l'ouverture (ou déchirure) de la face inférieure du sachet, ce qui permet d'assurer audit sachet une fonction de filtre.

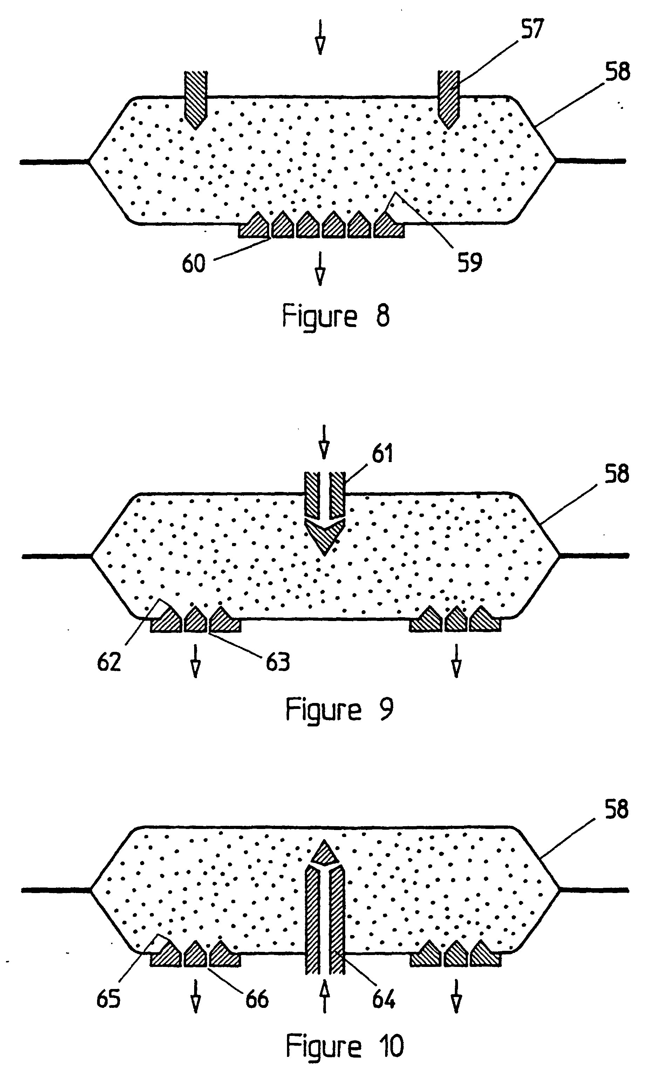

La Fig. 8 montre les organes (57) de percement du sachet (58) et les éléments en relief et en creux (59) disposés autour des orifices d'écoulement (60). C'est un système équivalent à celui des Fig. 1 et 4.

La Fig. 9 montre l'extraction d'un sachet (58) avec une pointe unique (61) et des éléments en relief et en creux (62) et des orifices d'écoulement (63) disposés sur la périphérie du sachet.

Finalement, la Fig. 10 représente une pointe unique (64) d'arrivée d'eau vers le haut et le système de récupération de café sur le même côté comportant des éléments en relief et en creux (65) autour des orifices d'écoulement (66).

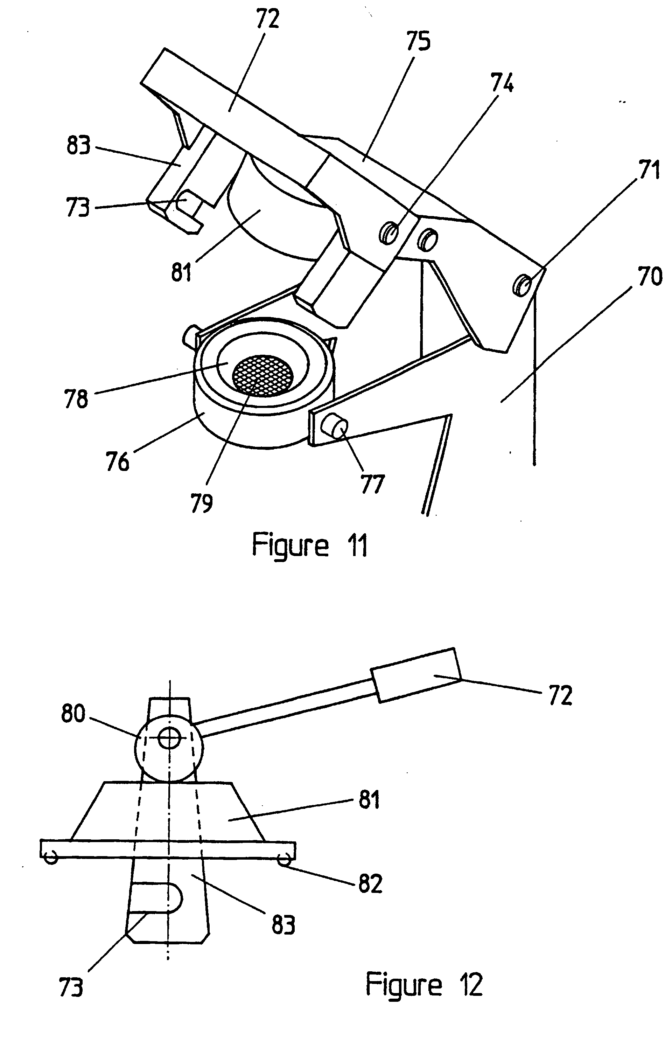

Les Fig. 11 et 12 représentent un système d'extraction comportant un châssis (70) sur lequel est monté à rotation le long de la tige (71) une partie supérieure (75) comportant lui-même un levier de blocage (72) avec crochets (73), montés sur un bras (83), ledit levier étant monté à rotation le long de la tige (74). La partie supérieure (75) se ferme sur une partie inférieure (76) montée en rotation le long de la tige (77) et comportant un logement (78) avec éléments en creux et en relief (79) prévu pour recevoir le sachet à extraire.

On opère de la manière suivante: on place le sachet dans le logement (78), on abaisse la partie supérieure (75) en appuyant sur le levier de blocage (72) jusqu'à engager les crochets (73) sur la tige (77).

Un excentrique (80) permet de bien serrer la partie supérieure d'arrivée d'eau (81) contre la partie inférieure (76) pour garantir une bonne étanchéité du système en appuyant bien le joint (82). On effectue l'extraction du sachet et on dégage le levier de blocage (72) pour soulever la partie supérieure (75). On prévoit avantageusement un moyen permettant de faire pivoter la partie inférieure (76) de manière à éjecter le sachet vers un compartiment prévu dans le châssis (70).

## Revendications

1. Dispositif pour l'extraction de sachets souples fermés, comprenant
- une partie supérieure ou bras (75) munie de moyens destinés à perforer la face supérieure du sachet (1) et permettant l'introduction de l'eau dans ledit sachet et d'un levier de blocage (72),
- une partie inférieure (76) présentant un logement (78) pour le logement de la capsule et des éléments en creux et en relief (79),
dans lequel le sachet est susceptible d'être inséré directement dans ledit dispositif, la partie supérieure ou la partie inférieure a soit un mouvement de rotation selon un axe horizontal ou vertical, soit un mouvement de rabattement, soit un mouvement à tiroir permettant cette insertion,
- dans lequel le levier de blocage solidarise la partie supérieure et la partie inférieure au moment de l'extraction du sachet
- et dans lequel la face d'extraction du sachet est étirée progressivement et localement contre les éléments en relief et en creux, ladite face d'extraction se déchirant en des endroits multiples selon un tracé prédéterminé par l'emplacement desdits éléments en relief et en creux en y atteignant sa tension de rupture, pour permettre l'écoulement du liquide après extraction.

2. Dispositif selon la revendication 1, **caractérisé en ce que** la partie supérieure (75) est à rotation selon un axe horizontal (71).

3. Dispositif selon l'une des revendications 1 ou 2, **caractérisé en ce que** le levier de blocage (72) présente un système de crochets (73) qui engage sur la tige (77) de la partie inférieure (76) au moment de l'extraction du sachet.

4. Dispositif selon l'une des revendications 1 à 3, **caractérisé en ce que** le levier de blocage (72) est monté à rotation le long de la tige (74).

5. Dispositif selon l'une des revendications 1 à 4, **caractérisé en ce que** le levier de blocage (72) comporte un excentrique (80) pour bien serrer la partie supérieure (75) contre la partie inférieure (76) lors de l'extraction du sachet.

6. Dispositif selon la revendication 5, **caractérisé en ce que** l'excentrique (80) appuie la partie supérieure d'arrivée d'eau (81) contre le joint (82).

7. Dispositif selon l'une des revendications 1 à 6, **caractérisé en ce que** la partie inférieure (76) comprend un moyen permettant d'éjecter le sachet en fin d'extraction.

8. Dispositif selon l'une des revendications 1 à 7,
**caractérisé en ce que** les moyens destinés à perforer la face supérieure du sachet sont sous la forme d'un disque (43) pourvu sur sa face inférieure d'éléments tels des pointes (44), lames ou croix saillante.

9. Dispositif selon l'une des revendications 1 à 7, **caractérisé en ce que** les moyens destinés à perforer la face supérieure du sachet sont une ou plusieurs pointes (11) d'injection d'eau, disposées en saillie dans la cavité de la pièce supérieure.

10. Porte-sachet utilisable dans le dispositif selon l'une des revendications 1 à 9, **caractérisé en ce qu'**il comprend une pièce inférieure (2,76) recevant le sachet et le support (4) de cette pièce, ladite pièce inférieure comprenant des éléments en relief et en creux (19,79) et des orifices d'écoulement (18, 37, 38, 39) pour permettre l'écoulement du liquide.

11. Porte-sachet selon la revendication 10, **caractérisé en ce que** les éléments en relief et en creux sont sous la forme de pyramides.

12. Porte-sachet selon la revendications 10 ou 11, **caractérisé en ce que** la pièce inférieure présente des ondulations sur sa périphérie.

## Claims

1. Device for extraction of sealed flexible sachets, comprising:
- an.upper member or arm (75) provided with means which are designed to perforate the upper surface of the sachet (1) and permit introduction of water into the said sachet, and with a locking lever (72);
- a lower member (76) which has a receptacle (78) for accommodation of the capsule and of the raised and hollow portions (79),
wherein the sachet can be inserted directly in the said device, the upper member or the lower member has either a movement of rotation according to a vertical or horizontal axis, or a movement of tilting, or a sliding movement which permits this insertion,
- wherein the locking lever renders the upper member and the lower member integral at the moment of extraction of the sachet; and
- wherein the extraction surface of the sachet is drawn progressively and locally against the raised and hollow portions, the said extraction surface tearing in multiple locations according to a path which is predetermined by the location of the said raised and hollow portions and reaching its rupture tension there, in order to permit flow of the liquid after extraction.

2. Device according to claim 1, **characterised in that** the upper member (75) rotates according to a horizontal axis (71).

3. Device according to claim 1 or claim 2, **characterised in that** the locking lever (72) has a system of hooks (73) which engages on the rod (77) of the lower member (76) at the moment of extraction of the sachet.

4. Device according to any one of claims 1 to 3, **characterised in that** the locking lever (72) is fitted such as to rotate along the rod (74).

5. Device according to any one of claims 1 to 4, **characterised in that** the locking lever comprises a cam (80) in order to clamp the upper member (75) well against the lower member (76) during extraction of the sachet.

6. Device according to claim 5, **characterised in that** the cam (80) supports the upper member for intake of water (81), against the seal (82).

7. Device according to any one of claims 1 to 6, **characterised in that** the lower member (76) comprises means which permit ejection of the sachet when extraction is completed.

8. Device according to any one of claims 1 to 7, **characterised in that** the means which are designed to perforate the upper surface of the sachet are in the form of a disc (43) provided on its lower surface with elements such as points (44), blades or a projecting cross.

9. Device according to any one of claims 1 to 7, **characterised in that** the means which are designed to perforate the upper surface of the sachet are one or a plurality of points (11) for injection of water, disposed such as to project in the cavity of the upper member.

10. Sachet holder which can be used in the device according to any one of claims 1 to 9, **characterised in that** it comprises a lower member (2, 76) which receives the sachet and the support (4) for this member, the said lower member comprising raised and hollow portions (19, 79) and flow apertures (18, 37, 38, 39) in order to permit flow of the liquid.

11. Sachet holder according to claim 10, **characterised in that** the raised and hollow portions are in the form of pyramids.

12. Sachet holder according to claim 10 or claim 11, **characterised in that** the lower member has corrugations on its periphery.

## Patentansprüche

1. Vorrichtung zum Extrahieren von geschlossenen flexiblen Portionspackungen, umfassend
- einen oberen Teil oder Arm (75) der mit Mitteln, die zum Perforieren der Oberseite der Portionspackung (1) bestimmt sind und die Einführung des Wassers in die Portionspackung gestatten, und mit einem Blockierhebel (72) versehen ist,
- einen unteren Teil (76), der eine Aussparung (78) zur Aufnahme der Portionspackung und vertiefte und erhabene Elemente (79) aufweist,
bei der die Portionspackung direkt in die Vorrichtung eingesetzt werden kann, wobei der obere Teil oder der untere Teil entweder eine Drehbewegung um eine horizontale oder vertikale Achse, eine Klappbewegung oder eine Einschubbewegung ausführt, die dieses Einsetzen gestattet,
- bei der der Blockierhebel bei der Extraktion der Portionspackung den oberen Teil und den unteren Teil fest verbindet
- und bei der die Extraktionsseite der Portionspackung an den erhabenen und vertieften Elementen allmählich örtlich gereckt wird, wobei diese Extraktionsseite an mehreren Stellen nach einem durch die Lage dieser erhabenen und vertieften Elemente vorbestimmten Muster reißt, indem sie an diesen Stellen ihre Reißspannung erreicht, um das Abfließen der Flüssigkeit nach der Extraktion zu gestatten.

2. Vorrichtung nach Anspruch 1, **dadurch gekennzeichnet, daß** der obere Teil (75) eine Drehung um eine horizontale Achse (71) ausführt.

3. Vorrichtung nach einem der Ansprüche 1 oder 2, **dadurch gekennzeichnet, daß** der Blockierhebel (72) ein Hakensystem (73) aufweist, das bei der Extraktion der Portionspackung die Stange (77) des unteren Teils (76) erfaßt.

4. Vorrichtung nach einem der Ansprüche 1 bis 3, **dadurch gekennzeichnet, daß** der Blockierhebel (72) um die Stange (74) drehbar montiert ist.

5. Vorrichtung nach einem der Ansprüche 1 bis 4, **dadurch gekennzeichnet, daß** der Blockierhebel (72) einen Exzenter (80) aufweist, um den oberen Teil (75) bei der Extraktion der Portionspackung gut an den unteren Teil (76) anzupressen.

6. Vorrichtung nach Anspruch 5, **dadurch gekennzeichnet, daß** der Exzenter (80) den oberen Wasserzuführungsteil (81) gegen die Dichtung (82) drückt.

7. Vorrichtung nach einem der Ansprüche 1 bis 6, **dadurch gekennzeichnet, daß** der untere Teil (76) ein Mittel besitzt, das den Ausstoß der Portionspackung bei Beendigung der Extraktion gestattet.

8. Vorrichtung nach einem der Ansprüche 1 bis 7, **dadurch gekennzeichnet, daß** die Mittel, die zum Perforieren der Oberseite der Portionspackung dienen, in Form einer Scheibe (43) vorliegen, die auf ihrer Unterseite mit Elementen, wie Nadeln (44), Klingen oder vorstehenden Kreuzen, versehen ist.

9. Vorrichtung nach einem der Ansprüche 1 bis 7, **dadurch gekennzeichnet, daß** die Mittel, die zum Perforieren der Oberseite der Portionspackung bestimmt sind, eine oder mehrere Wassereinspritznadeln (11) sind, die in dem Hohlraum des oberen Teils vorstehend angeordnet sind.

10. Portionspackungshalter, der in der Vorrichtung nach einem der Ansprüche 1 bis 9 verwendbar ist, **dadurch gekennzeichnet, daß** er ein die Portionspackung aufnehmendes unteres Teil (2, 76) und den Träger (4) dieses Teils aufweist, wobei dieses untere Teil erhabene und vertiefte Elemente (19, 79) und Ablauföffnungen (18, 37, 38, 39) aufweist, um das Ablaufen der Flüssigkeit zu gestatten.

11. Portionspackungshalter nach Anspruch 10, **dadurch gekennzeichnet, daß** die erhabenen und vertieften Elemente in Form von Pyramiden vorliegen.

12. Portionspackungshalter nach Anspruch 10 oder 11, **dadurch gekennzeichnet, daß** das untere Teil auf seinem Umfang Wellungen aufweist.
